# EUROPÄISCHE PATENTANMELDUNG

(11) **EP 0 819 787 A2**
(43) Veröffentlichungstag der Anmeldung: **21.01.1998**
(21) Anmeldenummer: 97111982.1
(22) Anmeldetag: 14.07.1997
(51) Int. Cl.: D01D 5/26

(54) **Fibrillen aus Cellulose**

(30) Priorität: 13.07.1996 DE 19628324
(71) Anmelder: Hocepro GmbH, 60528 Frankfurt/Main (DE)
(72) Erfinder: Die Erfindernennung liegt noch nicht vor

(57) **Zusammenfassung**

Die Erfindung betrifft Fibrillen aus Cellulose mit einer Länge zwischen 1 µm und 2 mm, mit einem Durchmesser zwischen 0,005 µm und 10 µm und mit einem Aspektverhältnis von 100 bis 10.000, Verfahren zum Herstellen der Fibrillen und Verwendungsansprüche. Die Fibrillen werden aus Natur oder Regenratfasern hergestellt, die vorzugsweise eine Gesamtorientierung von über 50% und einen Kristallanteil von über 35% sowie eine kristalline Orientierung von größer 0,8 aufweisen. Die Fibrillen eignen sich vor allem als Mischungsstabilisator, als Filtrationshilfsmittel und als Strukturhilfsmittel, weil sie über ein hohes Bindungsvermögen, ein verhältnismäßig hohes Festigkeitspotential und ein hohes Aspektverhältnis verfügen, wobei die Abmessungen der Fibrillen kleiner als die von Fasern sind.

## Beschreibung

Die Erfindung betrifft Fibrillen aus Cellulose mit einer Länge zwischen 1 µm und 2 mm, mit einem Durchmesser zwischen 0,005 µm und 10 µm und mit einem Aspektverhältnis von 100 bis 10.000, Mischungen aus Fasern und Fibrillen, Verfahren zum Herstellen und Vorschläge zur Verwendung dieser Fibrillen.

Cellulose bzw. Cellulosefasern gehören zu den ältesten bekannten und genutzten Stoffen. Cellulosefasern stehen entweder als Naturfasern oder als Regeneratfasern zur Verfügung. Bei den Naturfasern handelt es sich entweder um Baumwollfasern oder um Cellulosefasern aus anderen Rohstoffen wie Holz oder Einjahrespflanzen, die auf chemischem Wege isoliert werden. Für die Herstellung von Regeneratfasern werden Naturfasern zunächst auf chemischem Wege gelöst, um dann neu versponnen zu werden. Der größte Teil der Cellulosefasern wird zur Papier- und Textilherstellung eingesetzt. Neben diesen Hauptnutzungen sind jedoch zahlreiche andere Anwendungsgebiete bedeutsam, in denen Cellulosefasern als Hilfs- und Zuschlagstoffe, insbesondere als Mischungsstabilisatoren, aber auch zur Filtration oder als Strukturhilfsmittel eingesetzt werden.

Dem Einsatz von Cellulosefasern, die wegen ihrer chemischen und mechanischen Eigenschaften geschätzt und wegen der geringen Kosten bevorzugt eingesetzt werden, sind jedoch Grenzen gesetzt, weil insbesondere bei der Filtration oder bei der Verwendung als Mischungsstabilisator das Bindungsvermögen der Fasern gering ist.

Für die verschiedenen Anwendungsgebiete wird unter "Cellulose" das Molekül, die natürliche Faser oder die Regeneratfaser verstanden. Das Molekül wird, beispielsweise als carboxylierte und/oder methylierte Cellulose im Kleister verwendet. Cellulosefasern werden zur Papierherstellung sowie in begrenztem Umfang als Mischungsstabilisatoren eingesetzt, soweit das Bindungsvermögen der Fasern ausreicht. Die natürliche Faser weist Abmessungen von 0,5 bis 50 mm, in Einzelfällen bis zu 2 m Länge und 0,01 mm bis 0,5 mm Durchmesser auf. Regeneratfasern können dagegen bei einem Durchmesser von 0,01 mm bis 0,5 mm unendlich lang gesponnen werden. Je nach Verwendungszweck werden Regeneratfasern auf die gewünschte Länge geschnitten.

Die Cellulosefaser ist in der Weise aufgebaut, daß Moleküle aneinandergelagert sind und die sogenannten Elementarfibrillen bilden. Elementarfibrillen lagern sich zu Makrofibrillen zusammen. Bei natürlichen Fasern bilden Makrofibrillen übereinander angeordnete Schichten, aus denen die Faserwände aufgebaut sind, die das Lumen der Faser umschließen. Regeneratfasern werden ohne Lumen gesponnen. Während Cellulosemoleküle, wie oben beschrieben, allenfalls chemisch verändert werden, um für verschiedene Anwendungsgebiete angepaßt zu werden, werden Fasern je nach Verwendungszweck auch mechanisch aufbereitet.

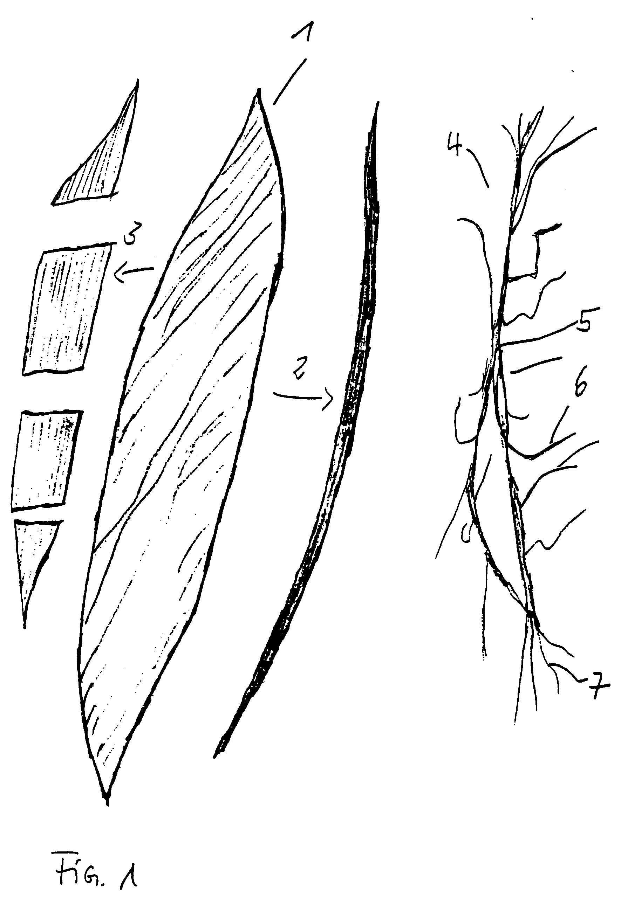

Die mechanische Aufbereitung von Fasern, beispielsweise durch Mahlung, bewirkt eine Oberflächenvergrößerung dadurch, daß äußere Faserschichten aufgerissen werden. Sie geht aber nach Auffassung der Fachleute stets mit einer starken Kürzung bzw. mit einem Brechen der Fasern einher. Wie in Fig. 1 dargestellt, entsteht beim Mahlen der meisten Fasern 1, insbesondere beim Mahlen von Papierzellstoffen, neben einem (erwünschten) Anteil von Fasern mit in etwa unveränderter Länge, aber mit vergrößerter Oberfläche ein (unerwünschter) Anteil Feinstoff 3, der dadurch charakterisiert ist, daß Bruchstücke entstehen, die im Verhältnis zu ihrer Breite bzw. ihrem Durchmesser sehr kurz sind, die also ein niedriges Aspektverhältnis (Länge / Breite) haben. Der Feinstoff hat kein gutes Bindungsvermögen, denn das geringe Aspektverhältnis besagt, daß die Überlappung der Fasern bzw. der Faserbruchstücke, durch die das Bindungsvermögen wesentlich bestimmt wird, gering ist. Zellstoffasern weisen im gesamten Fasergemisch nur einige wenige Fasern mit einem Aspektverhältnis größer 100 auf, Regeneratfasern können Aspektverhältnisse größer 200 erreichen. Für alle Fasertypen gilt allerdings, daß ein hohes Aspektverhältnis nur für besonders lange Fasern erreicht wird, die dann trotz des hohen Aspektverhältnisses, einfach wegen ihrer Länge und ihres Durchmessers für die genannten Verwendungszwecke nur begrenzt verwendbar sind. Insbesondere neigen lange Fasern zur Aggregation und Knotenbildung, was vor allem beim Einsatz als Mischungsstabilisator und bei der Filtration sehr nachteilig ist.

Die bisherigen Verfahren zur Steigerung des Bindungsvermögens von Cellulosefasern zielen sämtlich darauf ab, eine maximale Ausbeute von ungekürzten Fasern mit möglichst großer Oberfläche zu erhalten und den Anteil von Bruchstücken jeglicher Art zu minimieren. Bisher muß in Kauf genommen werden, daß beim Mahlen ein unvermeidbarer Anteil Feinstoff erzeugt wird, der wegen der mangelnden Überlappung der kurzen Bruchstücke und der zusätzlich durch die kurzen Bruchstücke bewirkten Störung der Überlappung der längeren Fasern das Bindungsvermögen der Cellulosefasern zusätzlich verschlechtert.

Überraschenderweise hat sich nun herausgestellt, daß es möglich ist, Cellulosefasern in Fibrillen zu zerlegen, die ein unerwartet hohes Bindungsvermögen haben. Als Fibrillen werden nachstehend Celluloseeinheiten bezeichnet, die zwischen 1,0 µm und 2 mm lang sind, einen Durchmesser zwischen 0,005 µm und 10 µm haben und die ein Aspektverhältnis, also ein Verhältnis von Länge zu Durchmesser von 100 bis 10.000, vorzugsweise 200 bis 10.000, aufweisen. Diese Fibrillen weisen eine geringere Länge und einen geringeren Durchmesser auf als Fasern und sie unterscheiden sich durch das hohe Aspektverhältnis deutlich vom Feinstoff, dessen schlechtes Bindungsvermögen lange bekannt ist.

Aus der DE 41 10 252 ist ein Verfahren zum Filtrieren von Getränken, chemischen, pharmazeutischen oder ähnlichen Flüssigkeiten bekannt. In dieser Schriftwerden Fibrillen aus Cellulose beschrieben sowie die Verwendung dieser Fibrillen beim Filtrieren von Flüssigkeiten.

Das unerwartet hohe Bindungsvermögen macht die Fibrillen besonders geeignet als Mischungsstabilisatoren, insbesondere für diverse Pulver bzw. Pulvermischungen. Soll lediglich ein Stauben oder Entmischen des Pulvers verhindert werden, so genügt ein minimaler Zusatz von Fibrillen, beispielsweise 1 bis 10% bezogen auf die Pulvermenge, um bis zu 90% des Pulvers durch die Fibrillen zu binden. Sollen die Pulver oder Pulvernischungen verpreßt werden, zeigt sich ein weiterer Vorteil der erfindungsgemäß beanspruchten Fibrillen darin, daß die Preßlinge durch den Zusatz von Fibrillen eine besonders hohe Festigkeit aufweisen.

Die Vorteile des hohen Bindungsvermögens zeigen sich auch bei der Filtration von Flüssigkeiten oder Aerosolen und dem Einsatz von Fibrillen als Flockungsmittel. Entweder werden beim Einsatz von Fibrillen als Filterhilfsmittel bessere Reinigungsergebnisse erzielt oder dasselbe Reinigungsergebnis wird durch geringeren Einsatz von Filterhilfsmitteln erreicht.

Beim Einsatz als Strukturhilfsmittel, beispielsweise für Sintergegenstände oder keramische Teile, allgemein zum Herstellen von porigen bzw. porösen Gegenständen ist zwar auch das hohe Bindungsvermögen der Fibrillen von Vorteil. Als besonders vorteilhaft erweist sich hier jedoch insbesondere die Dimension der Fibrillen, die deutlich unterhalb derjenigen von Fasern liegt. Damit ist durch den Einsatz von Fibrillen eine kleinere Porengröße erreichbar. Zudem können Fibrillen gezielt in verschiedenen Abmessungen bzw. in Gemischen definierter Fibrillengrößen hergestellt werden, so daß verschiedene Porenstrukturen definiert herstellbar sind. Falls das Strukturhilfsmittel nach dem Formen und Härten entfernt werden soll, kann dies wahlweise durch enzymatische, chemische oder thermische Abbauverfahren geschehen.

Das gewünschte hohe Bindungsvermögen stellt sich über einen weiten Längen- und Durchmesserbereich der Fibrillen ein. Abmessungen und Oberflächenstruktur der Fibrillen lassen sich durch Auswahl des Rohstoffs und/oder Variieren bzw. Kombinieren der Herstellungsverfahren in einem breiten Spektrum beeinflussen. Fibrillen können mit einer Länge von 1 µm bis 2 mm, vorzugsweise 10 µm bis 1,5 mm, insbesondere mit einer Länge von 20 µm bis 1 mm und mit einem Durchmesser von 0,005 µm bis 10 µm, vorzugsweise 0,05 µm bis 5 µm, insbesondere mit einem Durchmesser von 0,1 µm bis 2 µm hergestellt werden. Entscheidend für die Eignung der Fibrillen für die vorgeschlagenen Verwendungszwecke sind jedoch nicht nur die absoluten Dimensionen sondern auch, daß Länge und Durchmesser der Fibrillen jeweils in einem möglichst großen Aspektverhältnis zueinander stehen. Alle drei Parameter müssen innerhalb der vorgegebenen Werte liegen, um ein gegenüber den Fasern wesentlich gesteigertes Bindungsvermögen zu erhalten.

Die vorteilhaften Wirkungen des erhöhten Bindungsvermögens treten bereits bei einem Aspektverhältnis von mindestens 100 auf, das Bindungsvermögen verbessert sich jedoch mit steigendem Aspektverhältnis, so daß ein Verhältnis von Länge zu Durchmesser der Fibrillen von über 200, vorteilhaft von über 500, insbesondere von über 1.000, besonders bevorzugt über 2.000 angestrebt wird.

Es hat sich herausgestellt, daß Fibrillen, je nach Art und Weise der Herstellung oder Verarbeitung unterschiedliche Formen aufweisen. Sie sind entweder uniform, haben also eine verhältnismäßig glatte Oberfläche. Eine uniforme Fibrille ist mit dem Bezugszeichen 2 in Fig. 1 dargestellt. Fibrillen können aber auch verzweigt sein, wie mit Bezugszeichen 4 in Fig. 1 abgebildet. In diesem Fall zweigen vom Hauptstrang 5 der Fibrille 1 bzw. von den Hauptsträngen der Fibrille Subfibrillen 6 ab. Dabei wird bevorzugt, daß die Subfibrillen 6 selbst wieder ein hohes Aspektverhältnis aufweisen, also selbst wieder um ein Vielfaches länger sind als der Durchmesser der Subfibrille. Der Grad der Verzweigung kann durch optische Meßmethoden, beispielsweise durch Zählen der Verzweigungen unter dem Mikroskop, erfaßt werden. Die Uniformität bzw. die Verzweigung der Fibrillen wird bei der Herstellung der Fibrillendurch Ausmaß und Art und Weise des Energieeintrags sowie gegebenenfalls durch Zusatz von Hilfsmitteln bestimmt.

Verzweigungen können sich nicht nur an der Oberfläche der Fibrillen ergeben, sondern auch der Hauptstrang der Fibrille kann abschnittsweise geteilt sein, bzw. die Enden der Fibrillen können in einer Mehrzahl von Subfibrillen 7 auslaufen (vgl. Fig. 1). Je weiter die Struktur der Fibrillen aufgelockert ist, desto größer ist die Oberfläche und damit das Bindungsvermögen der Fibrillen.

Wird ein besonders hohes Bindungsvermögen des erfindungsgemäßen Celluloseproduktes gewünscht, so empfiehlt sich die Verwendung verzweigter Fibrillen. Die Fibrillen können dann jeweils mindestens 5, vorzugsweise 20, besonders bevorzugt 50 Subfibrillen aufweisen.

In Fibrillen zerlegte Cellulosefasern ergeben ein Celluloseprodukt mit besonderen Eigenschaften. Bei gleicher Länge, z. B. 2 mm, ist eine Fibrille aufgrund des hohen Aspektverhältnisses wesentlich schlanker als eine Natur- oder Regeneratfaser. Je Gewichtseinheit werden also weitaus mehr Fibrillen gezählt als Fasern. Dieser Vergleich verdeutlicht, daß dadurch eine weitaus höhere Oberfläche zur Verfügung steht, beispielsweise um pulverförmiges Gut zu binden oder um Trüb- oder Schwebstoffe zu filtern.

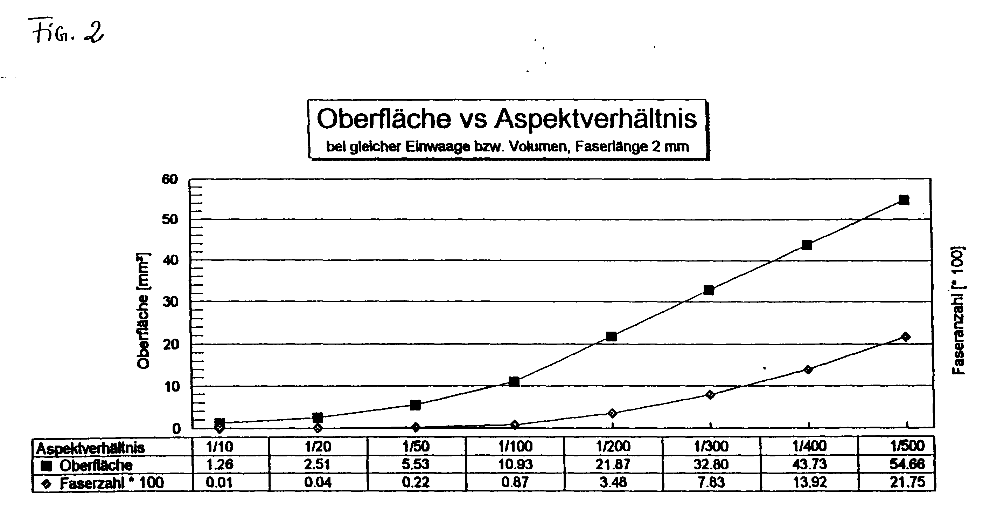

Erstaunlich ist, daß trotz des hohen Energieeintrags, mit dem Fasern zu Fibrillen zerlegt werden, die Fibrillen ein hohes Festigkeitspotential aufweisen. Bezogen auf den Durchmesser der Fibrillen ist das Festigkeitspotential (gemessen in cN/tex) annähernd so hoch wie das der Ausgangsfasern. Fig. 2 verdeutlicht, daß sich bei gleichem Gewicht bzw. Volumen, aber steigendem Aspektverhältnis die Oberfläche im Vergleich zur Anzahl der Fibrillen überproportional vergrößert. Dies erklärt das besonders hohe Bindungsvermögen der Fibrillen mit hohem Aspektverhältnis.

Durch das Zerlegen der Fasern in Fibrillen wird insbesondere im Bereich eines Aspektverhältnisses größer 200 für Fibrillen von ca. 2 mm Länge eine Gesamtoberfläche von mehr als 0,29 m² je g Celluloseprodukt erreicht. Um das Bindungsvermögen eines Celluloseproduktes abzuschätzen, genügt es jedoch bereits, die Länge bzw. die Längenverteilung der Fibrillen zu erfassen und die Anzahl der Fibrillen je Gewichtseinheit zu bestimmen. Die verfügbare Oberfläche ist dann entweder aus Tabellen oder in einfacher Rechnung bestimmbar. Eine solche Analyse erlaubt es zudem, Fasern und Fibrillen auf höchst einfache Weise zu unterscheiden. Fasern sind in der Regel länger als Fibrillen, so daß in den meisten Fällen bereits nach der Längenmessung eine Unterscheidung möglich ist. Überlappen sich die Längenverteilungen, so zeigt die Anzahl der Fasern bzw. Fibrillen je Gewichtseinheit, um welches Celluloseprodukt es sich handelt. Bei Mischungen von Fasern und Fibrillen kann die Zusammensetzung der Mischung durch optische Meßverfahren und -geräte, zum Beispiel Kajaani FS 200 oder FiberScan, ermittelt werden.

Die Fibrillen können sowohl aus Natur- als auch aus Regeneratfasern hergestellt werden. Eine besonders hohe Ausbeute an Fibrillen ergibt sich, wenn Fasern mit einer möglichst hohen Gesamtorientierung von über 50%, vorzugsweise von über 60% verwendet werden. Die Gesamtorientierung beschreibt kristalline und parakristalline Cellulose, die parallel zur Längsachse der Faser ausgerichtet ist. Die Gesamtorientierung wird bestimmt durch Doppelbrechung.

Cellulosefasern weisen durch die besondere Anordnung der Cellulosemoleküle abschnittsweise eine kristalline Ordnung auf. Diese kristallinen Bereiche werden von parakristallinen Bereichen unterbrochen. Je nach Herkunft der Faser variiert der Anteil der kristallinen Bereiche der Fasern. Vorteilhaft für eine hohe Ausbeute an Fibrillen ist ein Kristallanteil von über 35%, vorzugsweise von über 40%.

Neben dem Anteil der kristallinen Bereiche ist auch die kristalline Orientierung für die Ausbeute an Fibrillen von Bedeutung. Die kristalline Orientierung beschreibt die Ausrichtung der kristallinen Bereiche bezogen auf die Längsachse der Faser. Verlaufen die kristallinen Bereiche vollständig faserparallel, beträgt die kristalline Orientierung 1, sind die kristallinen Bereich vollständig im rechten Winkel zur Faserachse ausgerichtet, beträgt die kristalline Orientierung 0. Besonders bevorzugt wird eine kristalline Orientierung größer 0,8, insbesondere größer 0,9.

Bei Versuchen mit verschiedenen Faserrohstoffen hat sich herausgestellt, daß Fasern, die niedrige Naßscheuerzahlen aufweisen, eine besonders hohe und gleichmäßige Ausbeute an Fibrillen ergeben. Naßscheuerversuche setzen die Faser einer Reibung aus, die die Fibrillen voneinander abschert. Die Meßmethode und die daraus resultierenden Überlegungen zur Faserstruktur sind zum Beispiel beschrieben in Stöver, H.: Zur Fasernaßscheuerung von Viskosefasern; Faserforschung und Textiltechnik, 19 (1968) 10, S. 447 - 452. Die Ausbeute an Fibrillen bei Fasern mit einer Naßscheuerzahl über 500 ist zu gering. Bei Naßscheuerzahlen unter 200, vorzugsweise unter 100, insbesondere unter 50 werden zufriedenstellende bis ausgezeichnete Ausbeuten an Fibrillen erzielt.

Zu den Naturfasern, die sich für die Herstellung der erfindungsgemäßen Fibrillen eignen, zählt zum Beispiel Hanf. Regeneratfasern, die die vorstehend beschriebenen Charakteristika aufweisen, sind beispielsweise hoch orientierte Rayon-Fasern, Polynosic-Fasern, Lyocell-Fasern, insbesondere solche, die nach dem NMMO-Verfahren (N-Methylmorpholin-oxid-Verfahren) hergestellt sind, aber auch nach dem Carbamat- oder dem DMAc/LiCl-Verfahren (Dimethyl-Acetamid/Lithiumchlorid-Verfahren) gesponnene Regeneratfasern.

Der in Kenntnis der nützlichen und vorteilhaften Eigenschaften der erfindungsgemäßen Fibrillen vielleicht naheliegende Gedanke, besonders dünne Fasern, die sich zu Fibrillen kürzen lassen, in analoger Weise durch Verspinnen herzustellen, läßt sich technisch nicht durchführen, da der Durchmesser der zu spinnenden Fasern nicht beliebig reduziert werden kann, weil zum einen nicht beliebig feine Spinndüsen herstellbar sind und weil zum anderen die Festigkeit der Einzelfaser um so weiter abnimmt, je dünner sie ist. So kann beispielsweise eine Viskosefaser nur auf einen minimalen Durchmesser von ca. 10 µm reduziert werden.

Der Stand der Technik gibt wenig Anregung zu Herstellungsverfahren für Fibrillen. Dies ist einerseits darauf zurückzuführen, daß Fibrillen, insbesondere im Textilbereich, unerwünscht sind und besonders darauf geachtet wird, ein Fibrillieren der Fasern zu vermeiden. Zu anderen sind Fachleute bisher der Auffassung, daß Fasern oder Faserbruchstücke, die kürzer als 0,5 mm sind, wegen des hohen Anteils von Feinstoff mit seinem besonders niedrigen Aspektverhältnis nicht zur Verbesserung des Bindungsvermögens und/oder zur Festigkeitssteigerung beitragen. Es überrascht daher, daß die Ausbeute an Fibrillen, die wegen des großen Aspektverhältnisses ein hohes Bindungsvermögen aufweisen, vor allem von der Auswahl des richtigen Rohstoffes abhängt und daß an sich bekannte Verfahren dazu verwendet werden können, Fasern zu zerlegen.

Die erfindungsgemäßen Fibrillen sind ein zuverlässig reproduzierbares Erzeugnis. Sie sind ein Faserprodukt, das durch gezieltes Zerlegen von Cellulosefasern entsteht und bisher nicht bekannte Dimensionen aufweist. Fibrillen schließen mit den beanspruchten Abmessungen und dem geforderten Aspektverhältnis eine Lücke zwischen Fasern und Molekülen und vereinen dabei ganz überraschend deren jeweiligen Vorteile, nämlich das hohe Bindungsvermögen und das hohe Festigkeitspotential. Dabei sind die erfindungsgemäßen Fibrillen einfach und somit kostengünstig herzustellen.

Grundsätzlich ist es möglich, Fasern beliebiger Länge in Fibrillen zu zerlegen. "Zerlegen der Fasern" bedeutet hier vor allem ein Herauslösen von Fibrillen unter Beibehalten eines maximalen Aspektverhältnisses unter Vermeidung von Faserkürzungen. Um auf ökonomische Weise eine hohe Ausbeute an Fibrillen zu erzielen, ist es jedoch vorteilhaft, wenn die Ausgangsfasern bereits gleichmäßig auf eine Länge zwischen 2 und 60 mm vorgeschnitten wurden bzw. ein Längenspektrum zwischen 0,1 mm und 100 mm aufweisen.

Die besonderen Eigenschaften der erfindungsgemäßen Fibrillen werden durch die Tabellen 1 und 2 deutlich herausgestellt. Tab. 1 zeigt den Einfluß des steigenden Aspektverhältnisses bei gleichbleibender Länge der Fibrillen. Je schlanker die Fibrillen werden, desto größer wird die spezifische Oberfläche, also die Oberfläche je Gewichtseinheit (Oberfläche wird definiert als Summe aller Mantelflächen der Fibrillen). Dies erklärt vermutlich das außerordentliche Bindungsvermögen der Fibrillen. Gleichzeitig steigt die Anzahl der Fibrillen je Gewichtseinheit, wenn bei gleichbleibender Länge das Aspektverhältnis wächst. Die Vielzahl der Fibrillen, die jeweils lang und dünn sind und die einander deshalb überlagern, erzeugt zum einen ein dichtes Geflecht von Fibrillen mit hohem Retentionsvermögen. Zum anderen weist die hohe Überlappungsfrequenz der Fibrillen auf ein hohes Festigkeitspotential hin. Bestätigt wird diese Vermutung durch die hohe Grünfestigkeit von Kaltpreßlingen.

Aus Tab. 2 ist zu ersehen, wie die Länge der Fibrillen die spezifische Faserzahl und die spezifische Oberfläche beeinflußt. Bei den erfindungsgemäßen Fibrillen wird es sich überwiegend um Mischungen mit einem breiten Spektrum verschieden langer Fibrillen handeln, die jedoch alle ein hohes Aspektverhältnis aufweisen. Je kürzer und schlanker die Fibrillen sind, desto größer ist die spezifische Faserzahl und desto größer ist die spezifische Oberfläche. Kurze, schlanke Fibrillen sind daher besonders gut als Mischungsstabilisatoren aber auch als Filterhilfsstoffe geeignet.

Ein Zerlegen der Fasern durch mechanische Behandlung kann auf verschiedene Weise, beispielsweise durch Mahlen, Kneten oder Extrudieren erfolgen. Die Fasern können suspendiert sein, vorzugsweise in einem unten näher beschriebenen Quellmittel, und bei einer Stoffdichte von 0,5 bis 30%, vorzugsweise bei einer Stoffdichte von 1 bis 7% gemahlen werden (Naßverfahren). Wird die Stoffdichte im Bereich von 30 bis 98%, vorzugsweise 30 bis 85% gewählt, wird das Verfahren als Trockenverfahren bezeichnet. Je nach Verwendungszweck und Ausgangsmaterial können die nachstehend erläuterten Verfahren einzeln oder in Kombination angewendet werden.

Die Mahlung führt neben dem Zerlegen stets zu einer gewissen Verkürzung des Ausgangsmaterials. Bei der Anwendung von Knet- und Extrudierverfahren beruht das Zerlegen von Fasern in Fibrillen vorwiegend auf Reibung. Anders als bei der Mahlung werden die Fasern und Fibrillen kaum schneidend beansprucht. Eine Faser- bzw. Fibrillenkürzung tritt, wenn überhaupt, in weit geringerem Maße auf als beim Mahlen. Zum Einstellen der zwischen den Fasern auftretenden Reibungskräfte wird häufig ein Hilfsmittel eingesetzt. Dabei kann es sich um feste, pastöse oder flüssige Stoffe handeln. Besonders vorteilhaft ist es, daß für einige Ahwendungszwecke das zu bindende Gut als Hilfsmittel einsetzbar ist. Die Fasern werden in diesem Fall zusammen mit dem zu bindenden Gut verarbeitet, so daß das Zerlegen und der Abbindevorgang in einem Arbeitsgang zusammengefaßt werden. Am Ende dieses Verfahrensschrittes sind dann die Fasern zumindestens teilweise in Fibrillen zerlegt und die Fibrillen sind intensiv in das feste, pastöse oder flüssige Gut eingearbeitet.

Für besondere Anwendungsfälle ist es ohne weiteres möglich, die Fasern bei besonders niedrigen Temperaturen zu zerlegen. Die sogenannte Kryogenmahlung erfordert, daß die Fasern in abgekühlten Zustand, beispielsweise nach Einmischen in flüssigen Stickstoff, gemahlen oder geknetet werden.

Das Mahlen oder Kneten kann in bekannten Vorrichtungen durchgeführt werden, beispielsweise in Refinern, Beatern oder Holländern, aber auch in geeigneten Knetvorrichtungen oder Extrudieranlagen, insbesondere sind Doppelschneckenextruder (z. B. BIVIS-Anlagen) geeignet.

Es ist bekannt, daß die mechanischen Verfahren durch verschiedene Parameter beeinflußbar sind und daß die Eigenschaften des Endprodukts in Abhängigkeit vom Ausgangsprodukt im Rahmen dieser Parameter einstellbar sind. Insbesondere wirken sich die Stoffdichte, eventuell zugesetzte Quellmittel, von denen einige unten näher beschrieben sind, aber auch der Zusatz von Hilfsmitteln zum Zerlegen auf die Ausbeute an Fibrillen und bei der Einstellung des jeweils gewünschten Aspektverhältnisses aus. Daneben bieten sich gängige, dem Fachmann bekannte Variationsmöglichkeiten der jeweiligen Geräte wie beispielsweise Spaltabstand des Refiners, Beaters oder Holländers, Plattenprofile, Ausgestaltung der Knetvorrichtungen oder Schnecken oder Variieren der Stoffdichte und/oder Durchsatzmenge zum Einstellen der gewünschten Produkteigenschaften an.

Neben dem mechanischen Energieeintrag kann das Zerlegen durch Anwendung von Ultraschall oder durch thermische Verfahren erfolgen. Unter letzteren ist besonders das batchweise oder kontinuierlich geführte Dampfexplosionsverfahren zu nennen. Die Fasern werden in einem Druckbehälter zunächst erhitzt, dann wird das Faser-Dampf-Gemisch beim Passieren der Auslaßöffnung durch das schlagartige Verringern des Drucks entspannt. Da auch in die Fasern Dampf eingedrungen ist, werden die Fasern durch die Volumenvergrößerung beim Entspannen des Dampfes in Fibrillen zerlegt. Neben Wasser wird Ammoniak in Dampfexplosionsverfahren eingesetzt.

Die vorstehend beschriebenen Verfahren können, je nachdem, welche Produkteigenschaften gewünscht sind, einzeln oder in Kombination angewandt werden.

Ein Beispiel für das Herstellen von erfindungsgemäßen Fibrillen ist das Zerlegen von Regeneratfasern mit einer Ausgangslänge von 6 mm in einem Single-Disc-Refiner mit Rotor und Stator. Der Scheibenabstand wird mit 0,3 mm gewählt, die Stoffdichte der Fasersuspension beträgt 1% (1 Gewichts% ofentrockene Fasern in Wasser). Der Energieeintrag beträgt 600 kwh/t. Die Ausbeute an Fibrillen beträgt mindestens 70%. Die Herstellungsverfahren sind an sich bekannt. Der Fachmann weiß, wie er die erforderlichen Geräte und sonstigen Verfahrensparameter einzustellen hat, um das Zerlegen zu optimieren.

Besonders bevorzugt wird der Einsatz von Quellmitteln vor oder während des Zerlegens, um die Ausbeute zu steuern, die zu erzeugenden Abmessungen zu beeinflussen, den Energieeinsatz beim Herstellen der Fibrillen zu verringern und/oder um die Fibrillen chemisch zu verändern und so besondere Produkteigenschaften gezielt einzustellen. Zum Quellen eignen sich alle als Quellmittel und/oder Lösungsmittel für Cellulose bekannten Substanzen, beispielsweise Laugen, Säuren, Wasser, Salzlösungen, Metallkomplexe, aber auch organische und/oder gasförmige Quellmittel.

Besonders geeignete Quellmittel sind in Unteransprüchen aufgeführt. Aminoxide sind wegen ihrer Eignung zum Recycling besonders umweltfreundliche Quellmittel. Tenside wie z. B. Triton B vermögen Cellulose zu lösen. In entsprechend verdünnter Lösung wirken sie daher quellend auf Cellulose. Einige Quellmittel, darunter Natronlauge, Ammoniak, aber auch organisch-wäßrige Quellmittel wirken strukturverändernd auf Cellulose. Beispielsweise überführen sie Cellulose 1 in eine Cellulose höherer Ordnung. Außerdem verändern sie die Reaktivität der Cellulose.

Auch Quellmittel können jeweils einzeln oder in Kombination angewandt werden, zum Beispiel Mischungen von Wasser und Alkoholen, verdünnte wäßrige Laugen oder Säuren.

Falls gewünscht, können auch Hilfsmittel zum Zerlegen der Fasern eingesetzt werden. Unter Hilfsmitteln werden in diesem Kontext Stoffe verstanden, die nicht quellend auf die Fasern wirken, sondern dem Ausgangsstoff zugesetzt werden, um auf andere Weise gewünschte Produkteigenschaften zu erzielen. Beispielsweise können vor dem Mahlen, Kneten oder Extrudieren Kaoline oder Carbonate mit Fasern vermischt werden, um eine mögichst hohe Reibung beim Kneten zu erzeugen. Dadurch werden die Ausbeute, aber auch die Dimensionen bzw. das Aspektverhältnis der Fibrillen effizient beeinflußt.

Nach dem Zerlegen der Fasern wird das Hilfsmittel entweder abgetrennt und es werden ausschließlich die Fibrillen weiterverwendet, oder das Hilfsmittel zum Zerlegen der Fasern verbleibt in der Mischung. Letzteres geschieht zum einen, um den Energieaufwand des Abtrennens zu vermeiden. Zum anderen
kann je nach Anwendungszweck in besonders vorteilhafter Weise das zu bindende Gut, insbesondere Pulver, als Hilfsmittel zum Zerlegen eingesetzt werden, so daß in einem Arbeitsgang das gewünschte (Zwischen-) produkt erzeugt wird.

Die besonderen Vorteile des erhöhten Bindungsvermögens der Fibrillen machen sich nicht erst bemerkbar, nachdem sämtliche Fasern in Fibrillen zerlegt sind, sondern schon bei Mischungen mit einem verhältnismäßig geringen Anteil an Fibrillen, beispielsweise 20% bezogen auf die Gesamtzahl aller Fasern und Fibrillen. Wurden bisher Cellulosefasern gemahlen, so wurde das klein dimensionierte Faserprodukt, summarisch als Feinstoff bezeichnet, minimiert. Mischungen aus Fasern und Fibrillen mit einem Anteil an Fibrillen von mindestens 20% sind bisher nicht bekannt und auch nicht erwünscht gewesen. Bevorzugt wird jedoch ein Anteil an Fibrillen von mindestens 40%, insbesondere von 60%, vorzugsweise von mehr als 80% an der Gesamtzahl aller Fasern und Fibrillen. Es ist aber auch ohne weiteres möglich, falls gewünscht, annähernd 100% Fibrillen aus den eingesetzten Fasern zu erzeugen. Die Mischungen aus Fasern und Fibrillen werden in besonders einfacher Weise dadurch erhalten, daß der Vorgang des Zerlegens nach einem der vorstehend beschriebenen Verfahren vorzeitig abgebrochen wird. Die Mischung aus Fasern und Fibrillen kann unter Einsatz eines Hilfsmittel hergestellt worden sein bzw. ein Hilfsmittel aufweisen.

Die vorstehend beschriebenen Fibrillen und die Mischungen aus Fasern und Fibrillen können auf vielfältige Weise verwendet werden. Eine besonders geeignete Verwendung ist der Einsatz als Mischungsstabilisator. Überall dort, wo feste, pastöse oder flüssige Stoffe in nicht separierender Mischung gehalten werden müssen, bietet sich der Einsatz von Cellulosefibrillen an. Sie sind preiswert und weisen aufgrund ihrer Abmessungen und des günstigen Aspektverhältnisses ein besonders hohes Bindungsvermögen auf. Falls erforderlich kann die Cellulose durch Einsatz geeigneter Quellmittel oder Hilfsmittel zum Zerlegen modifiziert werden, um an besondere Einsatzzwecke angepaßt zu werden.

Ein Hauptanwendungsgebiet für Mischungsstabilisatoren sind pulverförmige Preßmassen. Hier kommt neben dem eine Entmischung verhindernden hohen Bindungsvermögen als besonderer Vorzug der erfindungsgemäßen Fibrillen zum Tragen, daß die Fibrillen in besonderem Maße zur Festigkeit der Kaltpreßlinge (sog. Grünfestigkeit) beitragen, so daß durch die Verwendung von Cellulosefibrillen der Ausschuß erheblich reduziert wird.

Gleiches gilt für die Verwendung der Fibrillen und der Mischungen aus Fasern und Fibrillen als Tablettier- oder Pelletierhilfsmittel, wobei hier gegebenenfalls ein Arbeitsgang gespart werden kann, wenn die zu bindende Substanz beim Zerlegen der Fasern als Hilfsmittel einsetzbar ist.

Da die erfindungsgemäßen Fibrillen und Mischungen aus Fasern und Fibrillen in Kombination mit Flüssigkeiten starken Einfluß auf die Viskosität nehmen, sind sie besonders geeignet, um pastöse und flüssige Mischungen zu stabilisieren. Sie sind daher unter anderem sehr gut als Bohrhilfsmittel geeignet, können aber auch als Zusatz in Polier- und Schleifpasten verwendet werden.

Ein weiteres Anwendungsgebiet sind Lebensmittelzubereitungen. Cellulose ist unter Berücksichtigung der hygienischen und lebensmittelrechtlichen Forderungen ein ernährungsphysiologisch besonders geeigneter Mischungsstabilisator.

Ein weiteres, bedeutendes Anwendungsgebiet ist der Einsatz von Fibrillen als Retentionsmittel in der Papierindustrie. Anders als reine Retentionsmittel wie zum Beispiel Carboxymethylcellulose tragen die Fibrillen zusätzlich auch zur Festigkeit des Papiers bei. Dieser Vorteil beruht darauf, daß die Dimension der Fibrillen zwischen Molekül und Faser angesiedelt ist. Die feinen, schlanken Fibrillen eignen sich besonders zur Bindung feinpartikulärer Stoffe mit Abmessungen im Mikrometer-Bereich, zum Beispiel zum Binden von Xeolithen in Papierstrukturen. Xeolithe wie auch andere feinpartikuläre Stoffe sind relativ teure Zuschlagstoffe, die die Verwendungseigenschaften des jeweiligen Papiers prägen. Eine verbesserte Nutzung dieser Zuschlagstoffe durch eine verbesserte Retention im Papier ermöglicht sowohl eine Kostenersparnis als auch einen gezielteren Einsatz teurer Zuschlagstoffe.

Cellulose ist als Bestandteil zahlreicher Rezepturen für Kleber und Leime bekannt, am häufigsten wird wohl Carboxymethylcellulose (chemisch modifizierte Cellulosemoleküle) als Kleister eingesetzt. Carboxymethylierte Fibrillen sind wegen ihrer besonderen Abmessungen eine geeignete Ergänzung zu den bekannten molekular lösbaren Cellulosederivaten. Durch die veränderte Netzwerkstruktur der Kleber und Leime bewirken sie, daß die Produkteigenschaften wie Topfzeiten oder Abbindezeiten aber auch Auftragsmengen in einem weiten Bereich einstellbar sind.

Besondere Vorteile bieten die erfindungsgemäßen Fibrillen als Sinterhilfsmittel. Beim Vorbereiten keramischer und/oder mineralischer Werkstoffe vor dem Sintern ermöglichen die besonders günstigen Größenverhältnisse der Fibrillen, die deutlich kleiner und schlanker als Fasern aber weitaus voluminöser als Moleküle sind, eine besonders homogene Mischung. Beim Sintern brennt die Cellulose weitestgehend rückstandsfrei aus und bewirkt dadurch eine besonders feine und gleichmäßige Porenbildung. Die Fibrillen wirken also als Strukturhilfsmittel für diese Werkstoffe. Insbesondere im Bereich der Medizintechnik, beispielsweise bei der Herstellung künstlicher Gelenke bieten sich damit erhebliche Vorzüge, denn die Porosität der Werkstoffe, das heißt, die Anzahl, Verteilung und Feinheit der Poren, bestimmt wesentlich das Einwachsen der Implantate in den Körper.

Fibrillen ermöglichen als Strukturhilfsmittel auch das Herstellen von Chromatographieträgern mit besonderen, in Abhängigkeit von den Dimensionen der verwendeten Fibrillen definiert wählbaren Porenstrukturen. Da die Eignung der Chromatographieträger zum Trennen von Substanzgemischen und auch die Trennschärfe wesentlich durch die Porenstruktur vorgegeben wird, eröffnet sich durch die Verwendung der erfindungsgemäßen Fibrillen die Möglichkeit, neue Chromatographieträger mit einem erweiterten Anwendungsspektrum herzustellen. Als besonderer Vorteil ist dabei anzusehen, daß nach dem Formen und Härten des Chromatographieträgers die Fibrillen enzymatisch oder chemisch einfach und vollständig abbaubar sind.

Fibrillen und auch Mischungen aus Fasern und Fibrillen eignen sich ganz besonders zur Filtration fester, flüssiger und gasförmiger Substanzen sowie zum Filtern von Aerosolen. Die besonders große Oberfläche und die einfache Verarbeitbarkeit der Fibrillen erlauben es, einfach und preiswert Filter herzustellen, die an verschiedene Anwendungszwecke anpaßbar sind. Es ist aber auch ohne weiteres möglich, die Viskosität des Filtrats durch Zusatz von Fibrillen so einzustellen, daß vorhandene Filter besonders effizient genutzt werden können. Besonders vorteilhaft ist der Einsatz von Fibrillen in der Anschwemmfiltration und bei der Bindung von Fein- und Trübstoffen. Auch hier ist die lebensmittelrechtliche Unbedenklichkeit der Cellulosefibrillen hervorzuheben. Als weiterer Vorteil ist zu nennen, daß die Cellulosefibrillen ökologisch absolut unbedenklich und leicht abbaubar sind.

Im Vergleich zu anderen Stabilisatoren und/oder Filtern bzw. Filterhilfsmitteln bieten die Cellulosefibrillen den besonderen Vorteil, daß sie nicht nur ein besonders hohes Bindungsvermögen aufweisen sondern daß sie, insbesondere wenn die fibrillenhaltige Mischung verpreßt wurde, in erheblichem Maße auch zur Festigkeit der Halb- oder Fertigprodukte beitragen.

**Tabelle 1**

| Berechnung der Faseranzahl und Faseroberfläche in Abhängigkeit vom Aspektverhältnis bezogen auf 1/g Fasereinwaage. | | | | |
|---|---|---|---|---|
| Faserlänge [mm] | Aspektverhältnis | Faserdurchmesser [mm] | Anzahl [n/g] | Spezifische Oberfläche [m²/g] |
| 2,00 | 200 | 0,0100 | 5,2E+06 | 0,294 |
| 2,00 | 500 | 0,0040 | 3,3E+07 | 0,735 |
| 2,00 | 1000 | 0,0020 | 1,3E+08 | 1,471 |
| 2,00 | 2000 | 0,0010 | 5,2E+08 | 2,941 |
| 2,00 | 5000 | 0,0004 | 3,3E+09 | 7,353 |
| 2,00 | 10000 | 0,0002 | 1,3E+10 | 14,706 |

**Tabelle 2**

| Berechnung der Faseranzahl und Faseroberfläche in Abhängigkeit vom Aspektverhältnis bezogen auf 1/g Fasereinwaage. | | | | |
|---|---|---|---|---|
| Faserlänge [mm] | Aspektverhältnis | Faserdurchmesser [mm] | Anzahl [n/g] | Spezifische Oberfläche [m²/g] |
| 2,00 | 200 | 0,010006 | 5,2E+06 | 0,294 |
| 1,27 | 500 | 0,002531 | 1,3E+08 | 1,162 |
| 0,89 | 1000 | 0,000895 | 1,5E+09 | 3,287 |
| 0,63 | 2000 | 0,000316 | 1,6E+10 | 9,296 |
| 0,40 | 5000 | 0,000080 | 4,1E+11 | 36,744 |
| 0,28 | 10000 | 0,000028 | 4,6E+12 | 103,928 |

## Patentansprüche

1. Herstellung von Fibrillen mit einer Länge zwischen 1 µm und 2 mm, mit einem Durchmesser zwischen 0,005 µm und 10 µm und mit einem Aspektverhältnis von 100 bis 10.000 aus Cellulosefasern, dadurch gekennzeichnet, daß die Fibrillen durch Mahlen, Kneten oder Extrudieren hergestellt werden.

2. Herstellung der Fibrillen nach Anspruch 1 unter kryogenen Bedingungen, durch Anwendung von Ultraschall, durch Dampfexplosionsverfahren, oder durch Kombination von zwei oder mehr dieser Verfahren.

3. Herstellung der Fibrillen nach einem der Ansprüche 1 oder 2, dadurch gekennzeichnet, daß Quellmittel beim oder vor dem Herstellen der Fibrillen verwendet werden, wobei insbesondere Laugen, Säuren, Wasser, sowie organische und/oder gasförmige Quellmittel oder Aminoxide, tensidhaltige wäßrige Lösungen, Natronlauge, Ammoniak, organisch-wäßrige Quellmittel, und/oder flüssigem Ammoniak, oder aber Mischungen von Quellmitteln verwendet werden.

4. Herstellung von Fibrillen nach einem oder mehreren der Ansprüche 1 bis 3, dadurch gekennzeichnet, daß Fasern in Gegenwart eines Hilfsmittels zerlegt werden.

5. Mischungen aus Natur- oder Regeneratfasern aus Cellulose mit einer Gesamtorientierung über 50% und aus Fibrillen mit einer Länge zwischen 1 µm und 2 mm, mit einem Durchmesser zwischen 0,005 µm und 10 µm und mit einem Aspektverhältnis von 100 bis 10.000, dadurch gekennzeichnet, daß der Anteil an Fibrillen mindestens 20%, vorzugsweise mindestens 40%, insbesondere mindestens 80% der Gesamtzahl der Fasern und Fibrillen je Gewichtseinheit beträgt.

6. Mischungen aus Fasern und Fibrillen nach Anspruch 5, dadurch gekennzeichnet, daß die Mischung ein Hilfsmittel zum Zerlegen der Fasern oder das zu bindende Gut aufweist.

7. Verwendung von Fibrillen und Mischungen aus Fasern und Fibrillen nach einem der vorangehenden Ansprüche 1 bis 6 als Mischungsstabilisator, insbesondere für Pulvermischungen, für Reibbelagsmischungen oder Reibbeläge, zur Einstellung der Viskosität von Flüssigkeiten oder Pasten, insbesondere in Schleif- oder Polierpasten, in Bohrhilfsmitteln, in Lebensmittel- oder Futtermittelzubereitungen, sowie zur Einstellung der Viskosität von Leim- oder Klebstoffen.

8. Verwendung von Fibrillen und Mischungen aus Fasern und Fibrillen nach Anspruch 7, als Suspensier- oder Dispergierhilfsmittel, insbesondere für Lebensmittel- oder Futtermittelzubereitungen, zum Einstellen der Viskosität oder als Suspensierhilfsmittel für pharmazeutische oder kosmetische Präparate sowie als Tablettier- oder Pelletierhilfsmittel.

9. Verwendung von Fibrillen und Mischungen aus Fasern und Fibrillen nach mindestens einem der Ansprüche 5 oder 6 als Sinterhilfsmittel für mineralische und/oder keramische Werkstoffe oder als Strukturhilfsmittel für mineralische und/oder keramische Werkstoffe.

10. Verwendung von Fibrillen und Mischungen aus Fasern und Fibrillen nach einem der vorangehenden Ansprüche 5 oder 6 zur Filtration fester, flüssiger und/oder gasförmiger Stoffe sowie zur Filtration von Aerosolen, als Adsorptionsmittel zur Filtration von Gasen und/oder Aerosolen, als Filtermaterial für Anschwemmfiltrationen sowie als Filtermaterial zur Bindung von Fein- und Trübstoffen.

11. Verwendung von Fibrillen und Mischungen aus Fasern und Fibrillen nach Anspruch 10 als Flockungsmittel für sedimentierende oder flotierende Trennungsverfahren.

12. Celluloseprodukt, enthaltend Fibrillen mit einer Länge zwischen 1 µm und 2 mm, mit einem Durchmesser zwischen 0,005 µm und 10 µm und mit einem Aspektverhältnis von 100 bis 10.000, dadurch gekennzeichnet, daß es mehr als 500, vorzugsweise mehr als 5.000, insbesondere mehr als 50.000 Fibrillen je mg aufweist.

13. Celluloseprodukt, enthaltend Fibrillen mit einer Länge zwischen 1 µm und 2 mm, mit einem Durchmesser zwischen 0,005 µm und 10 µm und mit einem Aspektverhältnis von 100 bis 10.000, dadurch gekennzeichnet, daß es eine spezifische Oberfläche von mindestens 0,75 m²/g, vorzugsweise von mehr als 3,0 m²/g, insbesondere von mindestens 10 m²/g aufweist.

14. Verwendung von Natur- oder Regeneratfasern zum Herstellen von Fibrillen mit einer Länge zwischen 1 µm und 2 mm, mit einem Durchmesser zwischen 0,005 µm und 10 µm und mit einem Aspektverhältnis von 100 bis 10.000, wobei die Fasern eine Gesamtorientierung über 50%, vorzugsweise von über 60% aufweisen.

15. Verwendung von Fasern nach Anspruch 14, wobei die Fasern einen Kristallanteil von über 35 %, vorzugsweise von über 40 % aufweisen.

16. Verwendung von Fasern nach Anspruch 14 oder 15, wobei die Fasern eine kristalline Orientierung von größer 0,8, vorzugsweise von größer 0,9 aufweisen.

17. Verwendung von Fasern nach Anspruch 14 oder 15, wobei die Fasern eine Naßscheuerzahl von unter 500, vorzugweise von unter 200, insbesondere von unter 50 aufweisen.

18. Verwendung von Fasern nach einem der Ansprüche 14 bis 17, wobei die Natur- oder Regeneratfasern durch mechanisches Zerkleinern zu Kurzfasern gleicher Länge von 2 bis 60 mm oder zu Kurzfasern ungleicher Länge mit einem Längenspektrum von 0,1 mm bis 100 mm gekürzt sind.
